(19) Europäisches Patentamt
European Patent Office
Office européen des brevets

(11) **EP 0 622 974 B2**

(12) **NOUVEAU FASCICULE DE BREVET EUROPEEN**
Après la procédure d'opposition

(45) Date de publication et mention de la décision concernant l'opposition:
**30.07.2008  Bulletin 2008/31**

(45) Mention de la délivrance du brevet:
**29.09.1999  Bulletin 1999/39**

(21) Numéro de dépôt: **94400911.7**

(22) Date de dépôt: **27.04.1994**

(51) Int Cl.:
**H05B 7/144** (2006.01)

(54) **Procédé de commande d'un convertisseur de puissance pour l'alimentation en courant continu d'un four électrique à arc**

Verfahren zur Steuerung eines Gleichrichters zum Betrieb eines Gleichstromlichtbogenofens

Method for use in a rectifier for powering a DC arc furnace

(84) Etats contractants désignés:
**AT BE CH DE DK ES FR GB GR IE IT LI LU NL PT SE**

(30) Priorité: **30.04.1993  FR 9305183**
**22.10.1993  FR 9312661**

(43) Date de publication de la demande:
**02.11.1994  Bulletin 1994/44**

(73) Titulaire: **Alstom Power Conversion**
**92300 Levallois-Perret (FR)**

(72) Inventeurs:
• **Du Parc, Jacques**
**F-77760 Recloses (FR)**
• **Glinski, Christophe**
**F-95120 Ermont (FR)**
• **Wursteisen, Michel**
**F-77690 Montigny Sur Loing (FR)**

(74) Mandataire: **Riege, Christian**
**CAPRI sas**
**Cabinet en Propriété Industielle**
**33, rue de Naples**
**F-75008 Paris (FR)**

(56) Documents cités:
EP-A- 0 483 405          WO-A-91/20176
CH-A- 614 571            DE-A- 4 035 233
DE-A- 4 118 756          FR-A- 2 588 432
JP-A- 61 218 370         US-A- 4 129 809
US-A- 4 403 327          US-A- 4 725 939

• **ABB REVIEW, no.6, 1992, ZURICH, CH pages 11 - 16 W. SPATNY ET AL. 'Power Supplies for DC Arc Furnaces'**
• **PROCEEDINGS OF THE AMERICAN POWER CONFERENCE, no.52, 1990, CHICAGO, ILL., USA pages 453 - 457 M. MUSLU ET AL. 'Voltage Flicker Calculations for a 35 MW DC Electric Arc Furnace Supplied by a 12 Pulse Rectifier'**
• **Thyristor Phase-Controlled Converters and Cycloconverters, B.R.Pelly, John Wiley & Sons, pages 47-48, 55-58, 65-66, 107-110**
• **Proc. American Power Conf. No. 52, 1990, Chicago, Ill, pp 453-457, M. Muslu et al. "Voltage Flicker Calculation for a 35 MW DC Electric Arc Furnace..."**

EP 0 622 974 B2

**Description**

L'invention concerne un procédé de commande d'un convertisseur de puissance pour l'alimentation en courant continu d'un four électrique à arc.

De tels fours à arc électrique sont utilisés notamment pour fondre puis affiner des ferrailles.

L'invention s'applique plus particulièrement à l'alimentation en courant continu de telles charges, dont les paramètres électriques sont susceptibles de varier fréquemment et dans des proportions importantes.

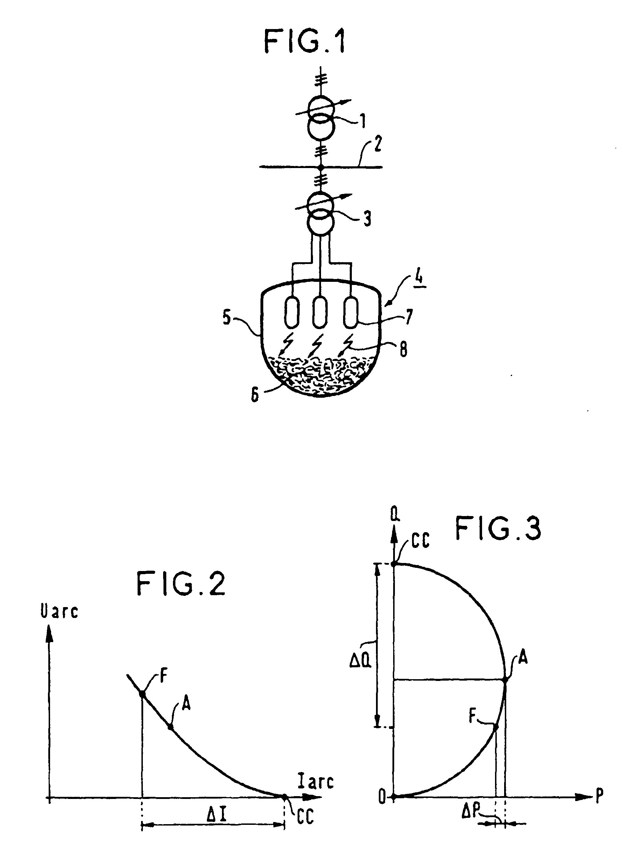

La technique la plus ancienne pour l'alimentation des fours à arc est illustrée figure 1.

Elle consiste à alimenter les électrodes directement en courant alternatif triphasé : un premier transformateur abaisseur 1 alimente une jeu de barres 2 distribuant le courant à un ou plusieurs transformateurs individuels ajustables 3 abaissant la tension au niveau voulu et alimentant en direct le four 4. Ce dernier est constitué d'une cuve 5 recevant dans sa partie inférieure les ferrailles 6 et pourvue de trois électrodes mobiles 7 reliées chacune à l'une des phases du circuit secondaire du transformateur abaisseur 3, produisant ainsi le jaillissement d'un arc 8 entre électrodes 7 et ferrailles 6 et provoquant la fusion puis l'affinage de ces dernières.

Les figures 2 et 3 illustrent les caractéristiques de fonctionnement d'un tel four à courant alternatif, respectivement la caractéristique tension ($U_{arc}$)/courant ($I_{arc}$) et puissance réactive (Q)/puissance active (P) pour les différents points de fonctionnement (CC repérant le point de fonctionnement en court-circuit, F, le régime correspondant à la fusion des ferrailles et A, à l'affinage de celles-ci).

Comme on peut le constater, un tel four alimenté en alternatif délivre une puissance sensiblement constante ($\Delta$P très faible) mais présente des variations importantes de puissance réactive ($\Delta$Q) et d'intensité ($\Delta$I), le fonctionnement étant sensiblement à puissance active constante en dehors des situations de court-circuit. En particulier, les variations importantes de puissance réactive sont susceptibles d'engendrer des fluctuations de tension importantes sur le réseau amont, réinjectant dans celui-ci des perturbations électriques, en particulier sous forme de "flicker", c'est-à-dire des fluctuations de tension dans la bande 0-30 Hz entraînant un "papillotement" de l'éclairage.

Depuis quelques années, la tendance est à la substitution à cette alimentation en courant alternatif d'une alimentation en courant continu, avec interposition d'un convertisseur alternatif/continu entre le transformateur aval et les électrodes.

L'alimentation en courant continu présente en effet deux avantages essentiels, dont découlent tous les autres, à savoir que :

- le pôle positif de l'arc est constitué par la ferraille elle-même, solide ou fondue, l'électrode mobile (unique ou multiple) constituant le pôle négatif. La dissipation d'énergie le long de l'arc étant non linéaire et supérieure du côté du pôle positif, on chauffe plus la ferraille que l'électrode.
- les surintensités dues aux court-circuits d'arcs, très fréquents en phase d'amorçage et de fusion, sont limitées par le convertisseur.

Il s'ensuit une moindre consommation d'électrode, une diminution des perturbations électriques réinjectées au réseau - notamment du flicker -, ainsi qu'une amélioration de la productivité du four.

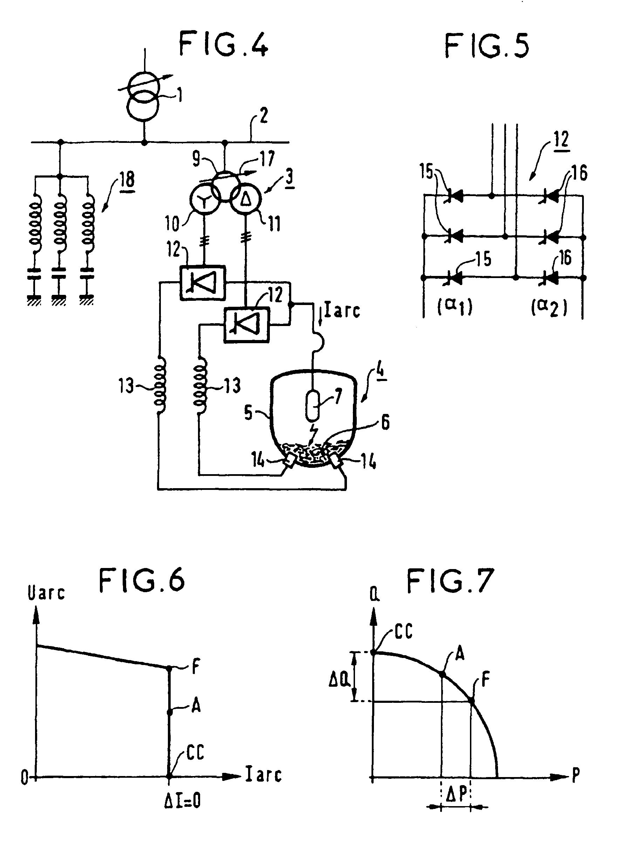

Les convertisseurs à courant continu utilisés jusqu'à présent sont du type général illustré schématiquement figure 4.

Le primaire 9 du transformateur aval alimente un ou plusieurs secondaires 10, 11, reliés chacun à un pont redresseur respectif 12 du type "pont de Graetz" classique à semiconducteurs commandés (thyristors). L'une des bornes de sortie de chaque pont est reliée à une électrode mobile commune 7 et l'autre borne est reliée, généralement par l'intermédiaire d'une inductance de lissage 13, à une électrode de sole respective 14 directement en contact avec la ferraille 6.

La structure d'un pont de Graetz, schématisée en 12 sur les figures, est illustrée plus en détail figure 5.

Celui-ci comporte deux séries de trois thyristors 15,16 montés en "parallèle double" (ou "triphasé double alternance") avec, respectivement, cathode commune et anode commune et attaqués à leur autre électrode par un même système (étoile ou triangle) de tensions polyphasées ; chaque série de thyristors 15, 16 est déclenchée avec un angle d'amorçage commun respectif $\alpha_1$ ou $\alpha_2$.

Généralement, pour limiter les harmoniques injectés au réseau, on utilise une pluralité de ponts de Graetz à six pulsations, alimentés chacun par des secondaires déphasés. Sur la figure 4 on a ainsi représenté deux secondaires 10, 11 déphasés de 30° par un couplage étoile-triangle alimentant deux ponts de Graetz, mais la solution est généralisable à trois ponts de Graetz (déphasages de -20°, 0°, +20°), quatre ponts de Graetz (déphasages de 0°, +15°, +30° et +45°), etc., chaque pont de Graetz constituant un convertisseur élémentaire à six pulsations.

À cet égard, bien que dans la suite on ne considérera qu'un ensemble à deux redresseurs, par exemple à deux ponts de Graetz, on comprendra que l'invention soit parfaitement généralisable à un nombre plus important de redresseurs, alimentés par des secondaires déphasés.

Les figures 6 et 7 sont homologues des figures 2 et 3, dans le cas d'un dispositif à courant continu.

Comme on peut le voir, le dispositif fonctionne à courant constant mais avec une puissance active très variable, à la différence de la technique à courant alternatif. On constate des variations moindres, mais encore notables, de la puissance réactive Q. En outre, en valeur moyenne, la consommation d'énergie réactive reste élevée, ce qui implique généralement la présence d'un régleur en charge 17 pour le transformateur aval et celle d'une batterie de compensation 18 relativement importante. Sur ce point, le dispositif à courant continu n'apporte guère d'améliorations notables par rapport à un dispositif à courant alternatif.

Les variations (ΔQ) de puissance réactive d'un régime de fonctionnement à l'autre sont toutefois moindres que dans le cas d'une alimentation en courant alternatif, d'où des fluctuations de tension plus faibles en amont sur le réseau et une diminution du flicker. Mais, dans le cas de réseaux d'alimentation insuffisamment dimensionnés, ces variations de tension, qui sont proportionnelles à la puissance réactive consommée et inversement proportionnelles à la puissance de court-circuit du réseau, demeurent souvent excessives, en particulier à cause du flicker, et obligent à disposer de moyens de correction additionnels très coûteux (dispositifs dits "antiflicker" ou "TCRs", *Thyristor Control Reactors)*, comme la plupart du temps pour une solution en courant alternatif.

En revanche, si l'on considère les valeurs instantanées des puissances réactives consommées, on note des valeurs crête nettement plus faibles en courant continu, car la régulation de courant permise par le convertisseur est en général suffisamment rapide pour limiter la surintensité en situation de court-circuit à une valeur pratiquement négligeable.

L'un des buts de l'invention est de remédier aux inconvénients respectifs rencontrés tant avec les solutions à courant alternatif qu'à courant continu, en proposant une nouvelle structure de convertisseur à courant continu qui permette une réduction importante de la consommation de puissance réactive et une amélioration notable de la caractéristique tension/courant fournie à l'arc continu, tout en réduisant le coût global du convertisseur, par simplification du transformateur aval (le régleur n'étant plus nécessaire) et une forte réduction du dimensionnement de la batterie de compensation, typiquement de moitié.

On verra en particulier que le convertisseur à courant continu de l'invention permet de fonctionner à puissance active sensiblement constante, comme dans le cas d'un four alimenté directement en courant alternatif, mais avec une faible puissance réactive consommée, et sans surdimensionnement du convertisseur ni de son transformateur associé.

On verra également que, selon les enseignements de l'invention, il est possible d'influer de façon très simple sur la caractéristique puissance réactive/puissance active (Q/P) de manière à optimiser celle-ci en fonction du contexte d'utilisation du four.

On pourra, par exemple, établir une caractéristique qui minimise la valeur de la puissance réactive consommée pour un point de fonctionnement donné ou, en variante, une caractéristique qui minimise les variations de la puissance réactive autour de sa valeur moyenne, notamment dans le cas des réseaux d'alimentation faiblement dimensionnés, pour lesquels la diminution du flicker est l'un des principaux impératifs, tant sur le plan de l'efficacité (réduction à un minimum des parasites réinjectés au réseau) que du coût de l'installation (par suppression des dispositifs "antiflicker").

En outre, on pourra choisir les caractéristiques de fonctionnement du four de manière que la valeur de la puissance réactive consommée reste sensiblement constante en dépit des variations éventuelles de courant, notamment en cas de variation de l'impédance de la charge.

Le procédé que propose l'invention est décrit dans la revendication 1. Des réalisations avantageuses sont décrites dans les revendications dépendantes.

D'autres caractéristiques et avantages de l'invention apparaîtront à la lecture d'un exemple détaillé de mise en oeuvre, donné en référence aux dessins annexés sur lesquels les mêmes références désignent des éléments semblables.

La figure 1, précitée, montre de façon schématique la configuration d'un four à arc à alimentation directe en courant alternatif de l'art antérieur.

Les figures 2 et 3, précitées, illustrent, respectivement, les caractéristiques tension/courant et puissance réactive/puissance active d'un tel four de l'art antérieur alimenté en courant alternatif.

La figure 4, précitée, montre de façon schématique la configuration d'un four à arc à alimentation en courant continu par convertisseur de l'art antérieur.

La figure 5 illustre plus en détail la structure, en elle-même connue, d'un pont de Graetz.

Les figures 6 et 7, précitées, illustrent, respectivement, les caractéristiques tension/courant et puissance réactive/puissance active d'un tel four de l'art antérieur alimenté en courant continu.

La figure 8 montre de façon schématique la configuration d'un four d'un four à arc à alimentation en courant continu par un convertisseur réalisé selon les enseignements de l'invention.

Les figures 9 à 10 montrent des configurations, en elles-mêmes connues, d'associations avec décalage de plusieurs convertisseurs de même structure.

Les figures 12 et 13 illustrent, respectivement, les caractéristiques tension/courant et puissance réactive/puissance active d'un four alimenté en courant continu par un convertisseur réalisé selon les enseignements de l'invention, la loi de variation des angles d'amorçage des ponts de Graetz ayant en outre été indiquée au bas de la figure 13.

La figure 14 illustre diverses caractéristiques puissance réactive/ puissance active qu'il est possible d'obtenir par un choix approprié des lois de variation des angles d'amorçage, et permettant d'adapter le fonctionnement du four à différents contextes d'utilisation.

La figure 15 illustre la famille de caractéristiques puissance réactive/puissance active obtenue lorsque varie le courant redressé suite à une réduction de l'impédance de la charge.

L'idée-mère de l'invention consiste à associer une structure classique de convertisseur à thyristors à un dispositif de roue libre et à prévoir une loi de commande correspondant sensiblement à une puissance active constante, dont la valeur soit adaptée d'une part aux caractéristiques de l'arc (pour améliorer l'efficacité du four), et d'autre part aux possibilités propres du convertisseur.

Un dispositif de roue libre est, comme on le sait, un dispositif bloquant dans un sens et passant dans l'autre, polarisé de manière à permettre à l'énergie électrique accumulée dans des éléments inductifs pendant la période de conduction des thyristors du convertisseur de s'écouler dans la charge pendant la période de blocage qui suit cette période de conduction.

Le dispositif de roue libre utilisé par l'invention est du type qui autorise une variation du rapport cyclique de conduction des thyristors principaux (en fonction de l'angle d'amorçage), la durée de conduction dans le dispositif de roue libre augmentant au fur et à mesure que diminue celle dans les thyristors principaux.

Selon l'invention, on utilise un dispositif de roue libre de ce type pour augmenter l'amplitude du courant continu quand diminue la tension continue (ou inversement), l'angle d'amorçage des thyristors augmentant et le rapport cyclique de conduction des thyristors diminuant alors de façon corrélative (et réciproquement). On obtient ainsi un fonctionnement à puissance active sensiblement constante sans surdimensionnement des thyristors ni du transformateur.

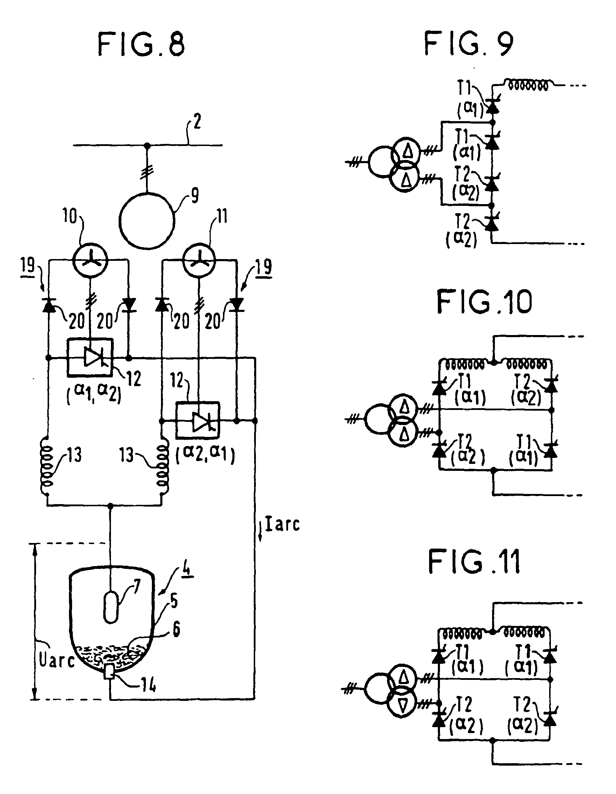

Dans l'exemple illustré, qui concerne un four à arc, le dispositif de roue libre est de préférence, comme illustré en 19 sur la figure 8, réalisé avec des diodes 20 montées entre le point milieu du secondaire 10 du transformateur et chaque borne de sortie du pont de Graetz 12, la diode étant bien évidemment polarisée en sens inverse par rapport au sens de passage du courant dans les diodes du pont de Graetz.

Le choix de diodes, plutôt que de thyristors, pour le dispositif de roue libre rend le convertisseur non réversible en puissance.

Cette caractéristique pourrait à première vue apparaître comme un inconvénient mais, dans l'application considérée, elle constitue en réalité un avantage remarquable.

En effet, dans le solution du pont de Graetz classique, le convertisseur est un convertisseur "réversible deux quadrants" (courant continu unidirectionnel, mais tension continue bidirectionnelle), ce qui permet à la régulation de courant d'être particulièrement efficace en cas de court-circuit d'arc, en maintenant la surintensité à une valeur négligeable ; ceci est certes avantageux pour le réseau amont, mais ne l'est pas pour le court-circuit d'arc, qu'on souhaite voir disparaître le plus vite possible par fusion de la ferraille cause de ce court-circuit (dans la solution avec alimentation directe en courant alternatif, la surintensité consécutive à un court-circuit d'arc permettait au contraire de fondre cette ferraille plus vite mais cependant au prix d'une pointe de puissance réactive très pénalisante).

L'invention permet, en rendant le convertisseur non réversible en puissance, de concilier heureusement ces deux aspects : en effet, au moment d'un court-circuit d'arc, la surintensité due au caractère non réversible de la structure permet de fondre plus rapidement la ferraille cause de ce court-circuit, sans pour autant entraîner de pointe de puissance réactive sur le réseau amont, car la surintensité en question ne sera supportée que par les diodes de roue libre. Mieux encore, cette surintensité peut être contrôlée et optimisée en fonction des caractéristiques propres des électrodes afin d'en limiter l'usure.

Selon un autre aspect de l'invention, il est avantageux de prévoir pour le transformateur une pluralité de secondaires tels que 10 et 11 combinées selon un montage dit "décalé", notamment du type "décalé parallèle", la combinaison des effets de la roue libre et du décalage permettant d'obtenir une diminution très importante de la puissance réactive consommée.

Plus précisément, la technique du décalage, en elle-même connue et illustrée par les schémas des figures 9 à 11, consiste à associer au moins deux convertisseurs de même structure et à différencier leurs commandes d'amorçage de façon à agir sur la puissance réactive consommée ; ont parle alors de "commande décalée" ou de "commande séquentielle". Cette technique est habituellement utilisée avec une association en série, côté continu, des deux ponts, comme illustré figure 9 (montage dit "décalé série").

Dans le cas présent, la tension continue à fournir à l'arc étant relativement faible par rapport aux possibilités des thyristors de forte puissance, un montage en "décalé série" conduirait à une mauvaise utilisation technologique des thyristors. On préfère donc un montage de type "décalé parallèle" dont les figures 10 et 11 illustrent deux variantes possibles.

Dans le montage "décalé parallèle" des figures 10 et 11, on associe deux ponts de Graetz constitués en réalité chacun de deux demi-ponts décalés, engendrant donc des harmoniques pairs (contrairement au pont de Graetz classique), mais avec croisement du décalage interne des deux ponts de manière à éliminer globalement en sortie les harmoniques pairs.

Toutefois, un montage "décalé parallèle" classique (donc sans roue libre) tel que celui des figures 10 ou 11 présente le grave inconvénient de créer un risque de "recommutation" des thyristors, particulièrement au voisinage d'une tension continue nulle. Pour limiter ce risque, on était jusqu'à présent conduit à limiter la plage d'excursion des angles d'amorçage, réduisant ainsi considérablement le gain de puissance réactive.

Un avantage remarquable de la combinaison, proposée par l'invention, d'un décalage et d'une roue libre est la suppression complète de ce risque de recommutation, dès lors que la roue libre est du type, spécifié plus haut, permettant un rapport cyclique de conduction variable pour les thyristors principaux. On bénéficie alors pleinement des gains cumulés de puissance réactive, avec une très grande sécurité de fonctionnement.

La figure 8 illustre le schéma complet proposé ainsi obtenu, avec un circuit de roue libre avec neutre à diodes et montage en "décalé parallèle".

Dans une première forme de mise en oeuvre de l'invention, on cherche, par une loi de commande appropriée, à minimiser à chaque instant (c'est-à-dire pour un point de fonctionnement donné) la puissance réactive Q consommée, et donc aussi l'énergie réactive. Ce cas de figure correspond à une situation dans laquelle le paramètre à optimiser en priorité est celui de l'abaissement de la puissance réactive moyenne.

À cet effet, on va agir sur les paramètres de réglage $\alpha_1$ et $\alpha_2$ de manière à obtenir un décalage maximum, c'est-à-dire $|\alpha_1 - \alpha_2|$ maximum. L'autre réglage (puisque l'on peut agir séparément sur les deux paramètres $\alpha_1$ et $\alpha_2$, il est possible de régler deux fonctions) permet d'ajuster le courant continu (ou la puissance active) en charge.

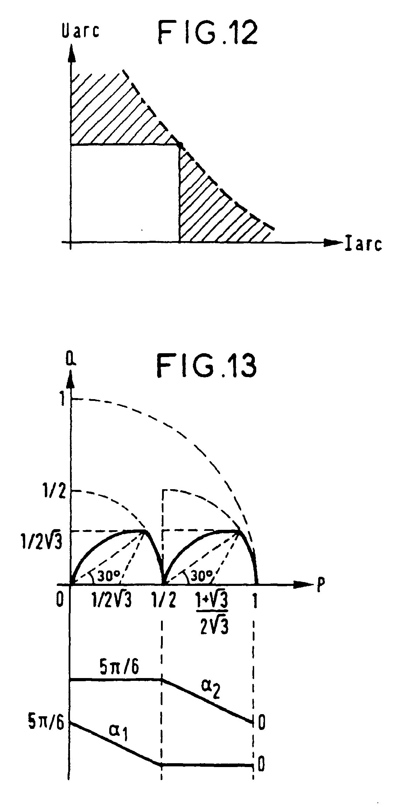

Les figures 12 et 13 illustrent les caractéristiques de fonctionnement obtenues avec le schéma de la figure 8, dans le cas de cette première forme de mise en oeuvre (minimisation de la puissance réactive moyenne consommée).

La figure 12 montre la caractéristique tension/courant, qui est très proche de celle obtenue avec une alimentation directe en courant alternatif, c'est-à-dire un fonctionnement à puissance constante (la zone hachurée illustrant l'amélioration des performances par rapport à un convertisseur continu de type classique).

La figure 13 donne la caractéristique puissance réactive/puissance active pour un point de fonctionnement donné, c'est-à-dire pour un courant continu d'arc $I_{arc}$ (ou courant redressé $I_d$) constant et une résistance équivalente d'arc variable.

Cette caractéristique montre que la puissance réactive consommée reste inférieure au tiers environ de la puissance active maximale, ce qui constitue une amélioration considérable par rapport à la situation antérieure, que l'alimentation soit en alternatif ou en continu (comparer avec les figures 3 et 7) ; on a en outre porté, en bas de la figure 13, les lois de variation des angles d'amorçage $\alpha_1$ et $\alpha_2$ en fonction de la puissance délivrée.

Les avantages procurés par l'invention grâce à un tel schéma sont très importants, à savoir :

- suppression du régleur (en charge ou à vide) du transformateur du convertisseur,
- diminution très importante de la puissance de la batterie de compensation-filtrage (division par deux environ),
- amélioration sensible de la productivité, en durée et en quantité,
- diminution des fluctuations de tension sur le réseau amont,
- diminution du flicker,
- diminution des pertes du convertisseur, et
- diminution des harmoniques et des perturbations hautes fréquences produites par le convertisseur.

La seule contrepartie, pour l'obtention de ces avantages, en est l'adjonction d'un dispositif de roue libre à diodes et le dimensionnement approprié des liaisons (inductances de lissage, câbles, électrodes) en aval du convertisseur pour les dimensionner aux surintensités permises par l'invention. Ceci, en pratique, conduit à la diminution du coût d'investissement du four électrique à arc.

Dans une seconde forme de mise en oeuvre de l'invention, on choisit la loi de commande, c'est-à-dire la loi de variation des angles d'amorçage $\alpha_1$ et $\alpha_2$ en fonction de la puissance délivrée, de manière à privilégier non plus la réduction de la puissance réactive moyenne consommée, mais la réduction des fluctuations de la puissance réactive autour de sa valeur moyenne, et donc le niveau de flicker, quitte à consommer une puissance réactive moyenne légèrement supérieure.

On dispose ainsi d'un convertisseur apte à contrôler la puissance active, tout en consommant une puissance réactive constante, que l'on peut alors compenser par une simple batterie de capacités fixes (du type de celle illustrée en 18 sur la figure 4), en s'affranchissant totalement de tout dispositif coûteux de type "TCR" ou "antiflicker", même en présence d'un réseau d'alimentation très faible.

Plus précisément, dans cette seconde forme de mise en oeuvre on conserve le schéma général de la figure 8 (c'est-à-dire un montage à pont de Graetz et roue libre décalée), avec une loi de commande des paramètres $\alpha_1$ et $\alpha_2$ dans laquelle, à la différence du cas précédent, on ne cherchera pas à maximiser le décalage $|\alpha_1 - \alpha_2|$.

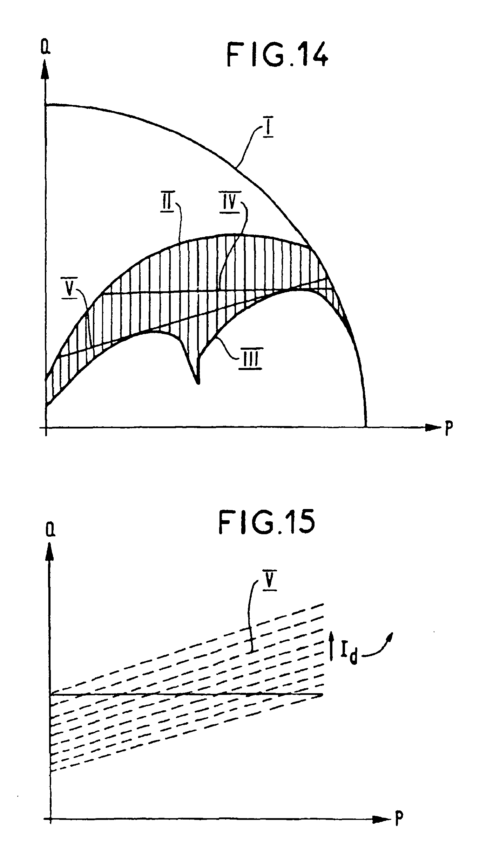

Sur la figure 14, on a illustré la caractéristique puissance réactive Q/puissance active P pour un point de fonctionnement donné, c'est-à-dire pour un courant d'arc $I_{arc}$ (ou courant redressé $I_d$) constant et une résistance équivalente d'arc variable. Sur cette figure :

- la caractéristique I correspond au schéma classique d'un convertisseur sans roue libre ni décalage (c'est-à-dire la caractéristique de la figure 7) ;
- la caractéristique II correspond au schéma avec roue libre mais sans aucun décalage, c'est-à-dire le schéma de la figure 8, mais avec $\alpha_1 = \alpha_2$ ;
- la caractéristique III correspond au même schéma, avec décalage maximum, c'est-à-dire $|\alpha_1 - \alpha_2|$ maximum (caractéristique illustrée figure 13).

On comprendra que, entre un décalage nul et un décalage maximal, il est possible d'obtenir une infinité de caractéristiques différentes, toutes situées dans la zone hachurée comprise entre les caractéristiques II et III.

Plus précisément, ces caractéristiques sont déterminées par les relations suivantes :

$$\begin{cases} P = R.I_d^2 = E_d.I_d = E_{do}.I_d.f_p(\alpha_1, \alpha_2) \\ \\ Q = \qquad\qquad\qquad E_{do}.I_d.f_q(\alpha_1, \alpha_2) \end{cases}$$

P       étant la puissance active,
Q       étant la puissance réactive,
R       étant la résistance équivalente d'arc,
$I_d$       étant le courant redressé,
$E_d$       étant la tension redressée en charge,
$E_{do}$       étant la tension redressée à vide pour un décalage nul,
$f_p, f_q$       étant des fonctions des angles d'amorçage.

Ainsi, pour un point de fonctionnement donné, c'est-à-dire R et $I_d$ donnés, P sera déterminée mais Q sera réglable dans une certaine plage.

On peut par exemple s'imposer Q constant, ce qui correspond à la caractéristique IV, ou encore toute autre caractéristique incluse dans la zone hachurée. $I_d$, P et Q étant ainsi déterminés, $\alpha_1$ et $\alpha_2$ s'en déduisent directement.

Par ailleurs, si l'on suppose, comme on l'a indiqué plus haut, que l'on cherche à maintenir sensiblement constante la puissance active en faisant croître le courant $I_d$ lorsque décroît la résistance équivalente d'arc (et inversement), on aura un déplacement du point de fonctionnement, et donc un décalage, sur ce diagramme, de la caractéristique.

Supposons maintenant que la résolution du système de deux équations à deux inconnues données plus haut assure, pour un point de fonctionnement à courant constant donné, une caractéristique telle que celle référencée V sur la figure 14, c'est-à-dire une fonction $Q = f(P)$ monotone croissante. Dans ce cas, lorsque le courant $I_d$ varie, la caractéristique V se déplace de la manière illustrée sur la figure 15, définissant ainsi une famille de caractéristiques correspondant chacune à un point de fonctionnement (courant $I_d$) donné. On peut alors choisir une loi de variation $I_d = f(R)$ monotone décroissante telle que Q reste constante en dépit des variations de $I_d$.

Dans ce dernier cas, on dispose alors d'un convertisseur présentant, dans toute la plage de fonctionnement (ou tout au moins dans la majeure partie de celle-ci), à la fois une puissance réactive Q et une puissance active P sensiblement constantes.

Divers perfectionnements peuvent être apportés au schéma général que l'on vient de décrire.

En premier lieu, il peut être avantageux de prévoir une permutation cyclique des sens de décalage des deux ponts ($\alpha_1 + \alpha_2$ pour un pont et $\alpha_2 + \alpha_1$ pour l'autre), en vue d'équilibrer l'échauffement des semiconducteurs et de limiter les risques d'apparition d'une composante continue nuisible pour l'induction magnétique du transformateur.

La période de cette permutation cyclique pourra être calculée en fonction de la constante de temps thermique des semiconducteurs et de la composante continue limite admissible pour le transformateur. Quant à l'instant de permutation dans la période, il devra être choisi de façon à minimiser l'amplitude du transitoire de commutation résultant, côté réseau ou côté continu, ce transitoire ne devant pas être plus important que ceux qui résultent des fluctuations naturelles de l'arc.

En second lieu, on peut prévoir par ailleurs une double régulation en courant, à savoir une régulation séparée des courants de chacun des deux ponts de Graetz en parallèle ou, mieux, une régulation simultanée de la somme des deux courants et de leur égalité (régulation du type dit "multivariable diagonalisable").

En cas de déséquilibre entre les deux ponts, une mauvaise compensation des harmoniques pairs apparaît, et il pourra être nécessaire de limiter ce déséquilibre (limitation de $\alpha_1$-$\alpha'_1$ et de $\alpha_2$-$\alpha'_2$) de façon à limiter les harmoniques pairs à un niveau acceptable. Un tel risque peut notamment se présenter lorsque les deux ponts de Graetz ne sont pas parfaitement connectés en parallèle, notamment lorsque la connexion est réalisée non pas au niveau des bornes aval des inductances de lissage, mais au niveau des deux électrodes de sole, censées être reliées électriquement par le "pied de bain".

En troisième lieu, on peut associer entre eux plusieurs sous-ensembles de même type, tels que ceux décrits à la figure 9, en les alimentant par des transformateurs déphasés afin de réduire les harmoniques. Le déphasage des transformateurs s'effectue de préférence au niveau des primaires, par exemple avec des enroulements de type "triangle zigzag" ou "triangle à prise intermédiaire".

**Revendications**

**1.** Procédé de commande d'un convertisseur de puissance pour l'alimentation en courant continu d'un four à arc (4), ce dispositif étant du type comportant au moins un transformateur (9, 10, 11) alimenté à son primaire (9) par un courant alternatif triphasé et délivrant sur au-moins un secondaire un courant triphasé appliqué à des moyens redresseurs délivrant en sortie, à la charge, une tension (Varc) et un courant (Iarc) redressés, ces moyens redresseurs comprenant un circuit de roue libre et étant du type comportant pour chaque secondaire, des semi-conducteurs commandés, **caractérisés en ce que** lesdits semi-conducteurs commandés sont déclenchés avec des angles d'amorçage ($\alpha1$, $\alpha2$) essentiellement variables, simultanément et en permanence qui sont modifiés de façon à augmenter la durée de conduction dans le circuit de roue libre et en diminuant corrélativement la durée de conduction dans les semi-conducteurs déclenchés, et inversement, de façon à délivrer à la charge une puissance active (P) et/ou une puissance réactive sensiblement constante, malgré les variations d'impédance de la charge, le courant redressé (Id) étant variable.

**2.** Procédé de commande d'un convertisseur selon la revendication 1, dans le cas d'un transformateur comportant au moins deux secondaires (10, 11), **caractérisé en ce que** les moyens redresseurs respectifs alimentés par ces secondaires sont associés entre eux selon un montage "décalé", avec des angles de commande d'amorçage respectifs $\alpha1$ et $\alpha2$ tels que $\alpha1 \neq \alpha2$.

**3.** Procédé de commande d'un convertisseur selon la revendication 2, **caractérisé en ce que** les angles de commande d'amorçage $\alpha1$ et $\alpha2$ sont choisis, pour un point de fonctionnement donné, de manière à minimiser la valeur de la puissance réactive consommée, la valeur moyenne résultante sur un cycle de fonctionnement étant alors minimal.

**4.** Procédé de commande d'un convertisseur selon la revendication 2, **caractérisé en ce que** les angles de commande d'amorçage $\alpha1$ et $\alpha2$ sont choisis, pour un courant redressé (Id) donné, de manière à minimiser les variations, notamment sous forme de flicker, de la puissance réactive autour de sa valeur moyenne (Q).

**5.** Procédé de commande d'un convertisseur selon la revendication 2, **caractérisé en ce qu'**il est prévu des moyens pour permuter cycliquement les sens de décalage des angles de commande $\alpha1$ et $\alpha2$ des deux moyens redresseurs respectifs.

**Claims**

**1.** A method of controlling a power converter device for supplying direct current to an arc furnace (4), the device being of the type comprising at least one transformer (9, 10, 11) with its primary (9) fed with a three-phase alternating current and delivering to at least one secondary a three-phase current applied to rectifier means outputting to the load a rectified voltage ($V_{arc}$) and current ($I_{arc}$), said rectifier means comprising a freewheel circuit, and being of the type comprising controlled semiconductors for each secondary, said method being **characterized in that** said controlled semiconductors are triggered with essentially variable firing angles ($\alpha_1$, $\alpha_2$), simultaneously and permanently, which are modified so as to increase the duration of conduction in the freewheel circuit whilst reducing correspondingly the duration of conduction in the triggered semiconductors, and vice versa, so as to deliver to the load a substantially constant active power (P) and/or reactive power despite the variations in impedance of the load, the rectified current (Id) being variable.

**2.** A method of controlling a converter according to claim 1 in the case of a transformer including at least two secondaries (10, 11), **characterized in that** the respective rectifier means fed by the secondaries are combined in an "offset" arrangement, with respective firing-control angles $\alpha_1$ and $\alpha_2$ such that $\alpha_1 \neq \alpha_2$.

3.  A method of controlling a converter according to claim 2, **characterized in that** the firing-control angles $\alpha_1$ and $\alpha_2$ are chosen, for a given operating point, so as to minimize the reactive power consumption, the resulting mean value over an operating cycle then being minimal.

4.  A method of controlling a converter according to claim 2, **characterized in that** the firing-control angles $\alpha_1$ and $\alpha_2$ are chosen, for a given rectified current (Id), so as to minimize variations, in particular in the form of flicker, in the reactive power about its mean value (Q).

5.  A method of controlling a converter according to claim 2, **characterized in that** means are provided for cyclically permutating the offset directions of the control angles $\alpha_1$ and $\alpha_2$ of the two rectifier means respectively.

**Patentansprüche**

1.  Verfahren zur Steuerung eines Leistungswandlers für die Versorgung eines Lichtbogenofens (4) mit Gleichstrom, wobei diese Vorrichtung von dem Typ ist, der wenigstens einen Transformator (9, 10, 11) aufweist, der an seinem Primärkreis (9) mit einem Dreiphasenwechselatrom gespeist wird und an wenigstens einem Sekundärkreis einen Dreiphasenstrom liefert, der an Gleichrichtermittel angelegt wird, die am Ausgang an die Last eine gleichgerichtete Spannung (Varc) und einen gleichgerichteten Strom (Iarc) liefern, wobei diese Gleichrichtermittel eine Freilaufschaltung umfassen und von dem Typ sind, der für jeden Sekundärkreis gesteuerte Halbleiter aufweist, **dadurch gekennzeichnet, dass** die gesteuerten Halbleiter mit im Wesentlichen variablen Zündwinkeln ($\alpha$1, $\alpha$2) gleichzeitig und andauernd getriggert werden, die so modifiziert werden, dass die Leitungsdauer in der Freilaufschaltung erhöht und dabei korrelativ die Leitungsdauer in den getriggerten Halbleitern verringert wird, und umgekehrt, dass an die Last trotz der Impedanzänderungen der Last eine Wirkleistung (P) und/oder eine im Wesentlichen konstante Blindleistung geliefert wird, wobei der gleichgerichtete Strom (Id) variabel ist.

2.  Verfahren zur Steuerung eines Wandlers nach Anspruch 1 im Fall eines Transformators, der wenigstens zwei Sekundärkreise (10, 11) aufweist, **dadurch gekennzeichnet, dass** die von diesen Sekundärkreisen gespeisten jeweiligen Gleichrichtermittel untereinander gemäß einer "versetzten" Anbringung mit jeweiligen Zündsteuerungswinkeln $\alpha$1 und $\alpha$2 verbunden sind, so dass $\alpha$1 $\neq$ $\alpha$2.

3.  Verfahren zur Steuerung eines Wandlers nach Anspruch 2, **dadurch gekennzeichnet, dass** die Zündsteuerungswinkel $\alpha$1 und $\alpha$2 für einen gegebenen Arbeitspunkt so ausgewählt sind, dass der wert der verbrauchten Blindleistung minimiert wird, wobei dann der resultierende Mittelwert über einen Arbeitszyklus minimal ist.

4.  Verfahren zur Steuerung eines Wandlers nach Anspruch 2, **dadurch gekennzeichnet, dass** die Zündsteuerungswinkel $\alpha$1 und $\alpha$2 für einen gegebenen gleichgerichteten Strom (Id) so ausgewählt werden, dass die Änderungen der Blindleistung um ihren Mittelwert (Q) herum, insbesondere in Form einee Flickerns, minimiert werden.

5.  Verfahren zur Steuerung eines Wandlers nach Anspruch 2, **dadurch gekennzeichnet, dass** Mittel zum zyklischen Vertauschen der Versetzungsrichtungen der Steuerungswinkel $\alpha$1 und $\alpha$2 der beiden jeweiligen Gleichrichtermittel vorgesehen sind.

# FIG.1

# FIG.2

# FIG.3

## FIG.4

## FIG.5

## FIG.6

## FIG.7

# FIG.8

# FIG.9

# FIG.10

# FIG.11

# FIG.12

Uarc

Iarc

# FIG.13

Q

1

1/2

1/2√3

30°        30°

0    1/2√3    1/2    $\frac{1+\sqrt{3}}{2\sqrt{3}}$    1    P

5π/6

α₂

5π/6    α₁

0

0

# FIG.14

# FIG.15